# EUROPEAN PATENT APPLICATION

(11) **EP 4 725 877 A1**
(43) Date of publication of application: **15.04.2026**
(21) Application number: 25206899.4
(22) Date of filing: 06.10.2025
(51) Int. Cl.: B65H 7/06, B65H 7/10, B65H 9/00, B65H 9/10

(54) **ELECTRONIC APPARATUS, RESIST UNIT, AND DRIVING METHOD FOR A RESIST UNIT**

(30) Priority: 08.10.2024 JP 2024176374
(71) Applicant: KYOCERA Document Solutions Inc., Osaka-shi, Osaka 540-8585 (JP)
(72) Inventor: OGAWA, Kotaro, Osaka-shi, Osaka, 540-8585 (JP)
(74) Representative: Viering, Jentschura & Partner mbB Patent- und Rechtsanwälte

(57) **Abstract**

An electronic apparatus according to the present technology includes a resist unit (31) and a control part (10). The resist unit (31) includes a resist roller (32) that feeds a recording medium (2) to a processing part (40) that performs processing on the recording medium (2) and a correction motor (38, 39) capable of moving the resist roller (32) to correct a deviation of the recording medium (2). The control part (10) drives the correction motor (38, 39) with a first pulse signal having a first frequency, and then drives the correction motor (38, 39) with a second pulse signal having a second frequency, which is a frequency lower than the first frequency and is a frequency capable of applying to the resist unit (31) vibration components of a phase opposite to a phase of vibrations in the resist unit (31).

## Description

### Field

The present technology relates to a technology such as an electronic apparatus including resist rollers that correct a paper deviation.

### Background

Japanese Patent Application Laid-open No. 2023-128149 has disclosed a sheet correction mechanism that performs feeding while correcting a sheet deviation relative to an image transfer position in the image forming unit. The sheet correction mechanism includes a pair of resist rollers that conveys a sheet while correcting a horizontal deviation and a tilt deviation of the sheet.

The pair of resist rollers is movable in a horizontal direction (sheet width direction) to correct the horizontal deviation of the sheet. Moreover, the pair of resist rollers is rotatable around a predetermined axis to correct a tilt deviation of the sheet.

However, there is a problem in that the resist rollers vibrate when the resist rollers are moved or rotated for example for correcting a sheet deviation. There is also a problem in that when a sheet is fed to an image transfer position of the image forming unit while the resist rollers are vibrating, an image is transferred to the vibrating sheet, which lowers the image quality.

Therefore, in the technology described in Japanese Patent Application Laid-open No. 2023-128149, control to reduce the speed stepwisely is executed when the pair of resist rollers is moved in the horizontal direction or is rotated around a predetermined axis for deviation correction. That is, in the technology described in Japanese Patent Application Laid-open No. 2023-128149, slow down control is executed.

### Summary

An electronic apparatus according to the present technology includes a resist unit and a control part.

The resist unit includes a resist roller and a correction motor. The resist roller feeds a recording medium to a processing part that performs processing on the recording medium. The correction motor is capable of moving the resist roller to correct a deviation of the recording medium.

The control part drives the correction motor with a first pulse signal having a first frequency, and then drives the correction motor with a second pulse signal having a second frequency, which is a frequency lower than the first frequency and is a frequency capable of applying to the resist unit vibration components of a phase opposite to a phase of vibrations in the resist unit.

A resist unit according to the present technology is a resist unit including a resist roller and a correction motor. The resist roller feeds a recording medium to a processing part that performs processing on the recording medium. The correction motor is capable of moving the resist roller to correct a deviation of the recording medium.

The correction motor is driven with a first pulse signal having a first frequency, and then the correction motor is driven with a second pulse signal having a second frequency, which is a frequency lower than the first frequency and is a frequency capable of applying to the resist unit vibration components of a phase opposite to a phase of vibrations in the resist unit.

A driving method according to the present technology is a driving method for a resist unit including a resist roller and a correction motor. The resist roller feeds a recording medium to a processing part that performs processing on the recording medium. The correction motor is capable of moving the resist roller to correct a deviation of the recording medium.

The driving method includes driving the correction motor with a first pulse signal having a first frequency, and then driving the correction motor with a second pulse signal having a second frequency, which is a frequency lower than the first frequency and is a frequency capable of applying to the resist unit vibration components of a phase opposite to a phase of vibrations in the resist unit.

These and other objects, features and advantages of the present disclosure will become more apparent in light of the following detailed description of best mode embodiments thereof, as illustrated in the accompanying drawings.

### Brief Description of Figures

Fig. 1 is a block diagram showing an electronic apparatus according to the present embodiment;
Fig. 2 is a side view showing a resist part;
Fig. 3 is a top view showing the resist part;
Fig. 4 is a diagram showing a state when a pair of resist rollers of the resist part is being moved in a horizontal direction;
Fig. 5 is a diagram showing a state when the pair of resist rollers of the resist part is being rotated around a vertical axis (Z-axis);
Fig. 6 is a block diagram showing an internal configuration of the resist part;
Fig. 7 is a diagram showing a basic operation of paper deviation correction processing executed by the resist part;
Fig. 8 is a flowchart showing horizontal deviation correction processing by a control part according to the present embodiment;
Fig. 9 is a diagram showing a state when the first correction motor is driven with a pulse signal with aHz without a pulse signal with bHz and a pulse signal with cHz;
Fig. 10 is a diagram showing a state when the first correction motor is driven without a pulse signal with bHz and with the pulse signal with aHz and the pulse signal with cHz;
Fig. 11 is a diagram showing a state when the first correction motor is driven with all the pulse signal with aHz, the pulse signal with bHz, and the pulse signal with cHz;
Fig. 12 is a diagram showing a state when the pair of resist rollers is moved by xmm in the horizontal direction (X-axis direction);
Fig. 13 is a diagram showing an amount of movement of the pair of resist rollers (vibrations of the resist unit) when the pair of resist rollers is moved by xmm in the horizontal direction only with the pulse signal with aHz in a comparative example;
Fig. 14 is a diagram showing an amount of movement of the pair of resist rollers (vibrations of the resist unit) when the pair of resist rollers is moved by xmm in the horizontal direction with the pulse signal with aHz and the pulse signal with cHz (and also the pulse signal with bHz) in the present embodiment;
Fig. 15 is a flowchart showing tilt deviation correction processing by the control part according to the present embodiment;
Fig. 16 is a diagram showing a state when the second correction motor is driven only with the pulse signal with dHz without a pulse signal with eHz and a pulse signal with fHz;
Fig. 17 is a diagram showing a state when the second correction motor is driven with the pulse signal with dHz and the pulse signal with fHz without the pulse signal with eHz;
Fig. 18 is a diagram showing a state when the second correction motor is driven with all the pulse signal with dHz, the pulse signal with eHz, and the pulse signal with fHz;
Fig. 19 is a diagram showing a state when the pair of resist rollers is rotated around the Z-axis by a target angle of rotation of θ degrees;
Fig. 20 is a diagram showing an angle of rotation of the pair of resist rollers (vibrations of the resist unit) when the pair of resist rollers is rotated around the Z-axis by θ degrees only with the pulse signal with dHz in a comparative example; and
Fig. 21 is a diagram showing an angle of rotation of the pair of resist rollers (vibrations of the resist unit) when the pair of resist rollers 32 is rotated around the Z-axis by θ degrees with the pulse signal with dHz and the pulse signal with fHz (and also the pulse signal with eHz) in the present embodiment.

### Detailed Description

Simple slow down control is insufficient as a technology of rapidly attenuating vibrations of resist rollers. In view of this, the present technology provides a technology capable of rapidly attenuating vibrations of the resist rollers.

Hereinafter, embodiments according to the present technology will be described with reference to the drawings.

### <Overall configuration and configurations of respective parts>

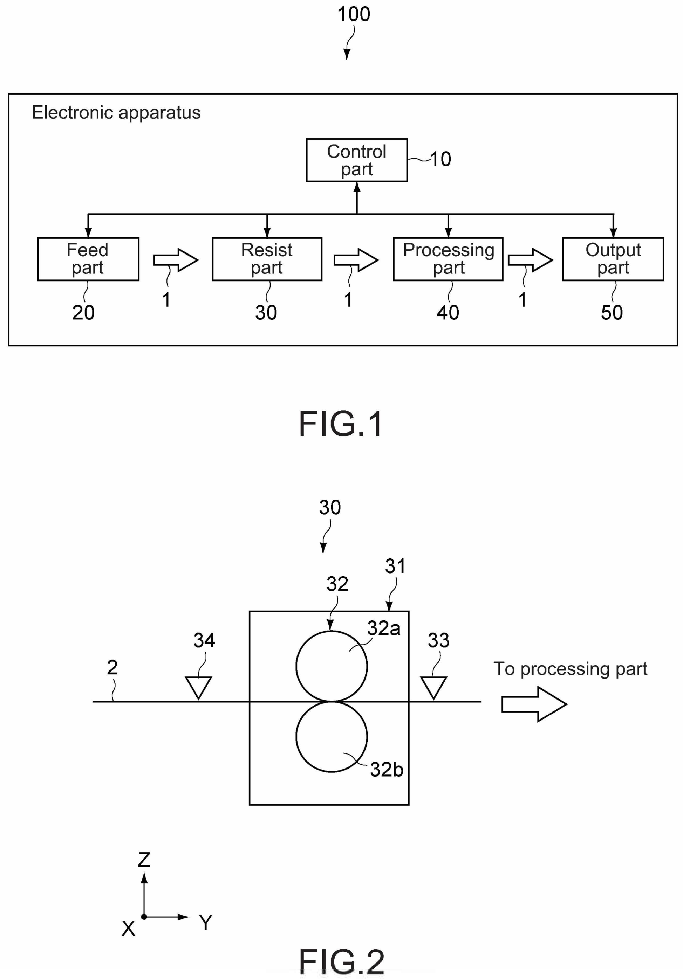

Fig. 1 is a block diagram showing an electronic apparatus 100 according to the present embodiment. The electronic apparatus 100 according to the present embodiment is a printer, a copying machine, a facsimile machine, or a multifunction peripheral, for example, which is provided with functions (print function, copying function, and document printing function) of two or more of these devices.

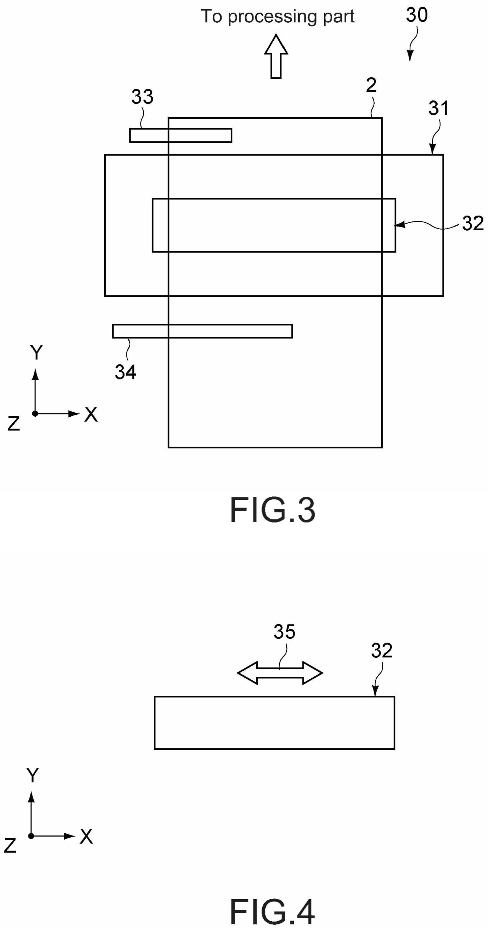

Typically, the electronic apparatus 100 may be any apparatus as long as the apparatus is capable of executing deviation correction of paper 2 (recording medium: see Fig. 2, Fig. 3, etc.) and is configured to be capable of performing predetermined processing on the paper 2 after the deviation correction.

As shown in Fig. 1, the electronic apparatus 100 according to the present embodiment includes a control part 10 that comprehensively controls the entire electronic apparatus 100. Moreover, the electronic apparatus 100 includes a feed part 20, a resist part 30, a processing part 40, and an output part 50 in order from the upstream in the conveyance direction of the paper 2. The feed part 20 feeds the paper 2. The resist part 30 feeds the paper 2 to the processing part 40 while correcting a deviation of the paper 2. The processing part 40 performs predetermined processing on the paper 2. The output part 50 retains the paper 2 output from the processing part 40.

In the present embodiment, a conveyance path 1 for conveying the paper 2 is formed on a path from the feed part 20 to the output part 50 via the resist part 30 and the processing part 40. In the example shown in Fig. 1, the conveyance path 1 is linearly shown for the sake of convenience. However, in general, the conveyance path 1 is configured as a curve from the perspective of space saving in arrangement within the electronic apparatus 100.

The control part 10 includes, for example, a central processing unit (CPU) and a motor driver that drives various motors in accordance with a control signal from the CPU. Moreover, the control part 10 includes a nonvolatile memory on which various programs, data, and the like necessary for the processing of the CPU are stored and a volatile memory used as a working area for the CPU. Moreover, the control part 10 includes a communication unit that communicates with other respective parts and external devices within the electronic apparatus 100.

The feed part 20 is capable of storing a certain number of pieces of paper 2. The feed part 20 is configured to be capable of feeding a plurality of pieces of stored paper 2 to the resist part 30 one by one depending on needs. The feed part 20 includes a feed tray, a feed roller, a motor, and the like. The feed tray is capable of storing the certain number of pieces of paper 2. The feed roller guides the pieces of paper 2 from the feed tray to the conveyance path 1 one by one to pass them to the resist part 30. The motor drives the feed roller.

The resist part 30 correctly conveys the paper 2 along the conveyance path 1 and feeds the paper 2 to the processing part 40 while correcting a horizontal deviation and a tilt deviation (skew) of the paper 2 fed from the feed part 20. It should be noted that a configuration of the resist part 30 will be described later in detail.

The processing part 40 executes predetermined processing (typically image forming processing) on the paper 2 fed from the resist part 30. Examples of the processing executed by the processing part 40 include print processing in the printer function (e.g., a laser method, an inkjet method, etc.), copy processing in the copying function (e.g., a laser method, an inkjet method, etc.), and document printing processing in the facsimile function (e.g., a laser method, an inkjet method, etc.). It should be noted that the processing executed by the processing part 40 may be any processing as long as it is processing on the paper 2.

The output part 50 is capable of receiving the paper 2 processed by the processing part 40 from the processing part 40 and discharging the paper 2 from the conveyance path 1. The output part 50 is configured to be capable of storing the paper 2 output from the conveyance path 1. The output part 50 includes an output roller that outputs the paper 2 from the conveyance path 1, a motor that drives the output roller, an output tray that stores the paper 2 output from the conveyance path 1, and the like.

### [Resist part 30]

Next, a configuration of the resist part 30 will be described in detail.

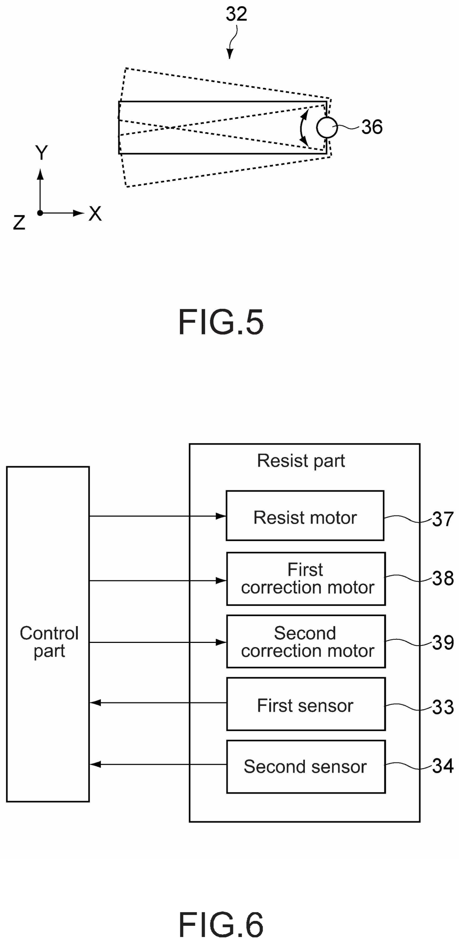

Fig. 2 is a side view showing the resist part 30. Fig. 3 is a top view showing the resist part 30. Fig. 4 is a diagram showing a state when the pair of resist rollers 32 of the resist part 30 is being moved in the horizontal direction. Fig. 5 is a diagram showing a state when the pair of resist rollers 32 of the resist part 30 is being rotated around a vertical axis (Z-axis). Fig. 6 is a block diagram showing an internal configuration of the resist part 30.

It should be noted that in each figure in the present embodiment, a direction corresponding to a length direction of the conveyance path 1 (length direction of the paper 2) is a Y-axis and a direction corresponding to a width direction of the conveyance path 1 (width direction of the paper 2) is an X-axis direction. Moreover, a direction perpendicular to the conveyance path 1 (direction perpendicular to the paper surface) is a Z-axis direction.

The resist part 30 according to the present embodiment includes a resist unit 31, a first sensor 33, and a second sensor 34. The first sensor 33 is provided at the downstream of the resist unit 31. The second sensor 34 is provided at the upstream of the resist unit 31.

The resist unit 31 includes a pair of resist roller 32 and a resist motor 37 (see Fig. 6). The resist motor 37 serves as a driving source that rotates the resist rollers 32. The resist unit 31 further includes a moving mechanism 35 (see Fig. 4) and a rotating mechanism 36 (see Fig. 5). The moving mechanism 35 moves the pair of resist rollers 32 in the X-axis direction (horizontal direction). The rotating mechanism 36 rotates the pair of resist roller 32 around the Z-axis.

The pair of resist rollers 32 is capable of sandwiching the paper surface of the paper 2 from both sides. The pair of resist rollers 32 is capable of conveying the paper 2 by being rotated while sandwiching the paper surface of the paper 2 from both sides. In the present embodiment, one resist roller 32b of the pair of resist rollers 32 is a driving roller and the other resist roller 32a is a following roller that rotates in accordance with the rotation of the driving roller. It should be noted that both the pair of resist rollers 32 may be driving rollers.

The pair of resist rollers 32 has a shape long in one direction (X-axis direction). It should be noted that the pair of resist rollers 32 may be configured, divided in the length direction (X-axis direction). The resist motor 37 is a stepping motor and rotates the resist rollers 32 in accordance with a command from the control part 10.

The pair of resist rollers 32 is movable by the moving mechanism 35 in the horizontal direction (longitudinal direction of the resist rollers: the X-axis direction). Accordingly, the pair of resist rollers 32 is capable of correcting a horizontal deviation of the paper 2 (deviation in the X-axis direction) (see Fig. 4). Moreover, the pair of resist rollers 32 is rotatable around the Z-axis by the rotating mechanism 36. Accordingly, the pair of resist rollers 32 is capable of correcting a tilt deviation of the paper 2 (deviation around the Z-axis: skew) (see Fig. 5). It should be noted that in the present embodiment, an axis of rotation of the pair of resist rollers 32 is provided on one end side in the longitudinal direction (X-axis direction) and the pair of resist rollers 32 is rotatable around the axis of rotation.

The moving mechanism 35 is configured to be capable of integrally moving the pair of resist rollers 32 in the horizontal direction (X-axis direction). The moving mechanism 35 is constituted by, for example, a base, a guide part, a first correction motor 38 (see Fig. 6), a rack-and-pinion mechanism (or ball screw mechanism), and the like. The base holds the pair of resist rollers 32. The guide part guides the base in a slidable manner. The first correction motor 38 serves as a driving source for movement. The rack-and-pinion mechanism (or ball screw mechanism) converts a rotational motion of the first correction motor 38 into a linear motion.

The first correction motor 38 is a stepping motor. The first correction motor 38 moves the pair of resist rollers 32 in the horizontal direction (X-axis direction) in accordance with a command from the control part 10.

The rotating mechanism 36 is configured to be capable of integrally rotating the pair of resist rollers 32 around the Z-axis. The rotating mechanism 36 includes a base, a holder, an axis of rotation, a second correction motor 39 (see Fig. 6), and the like. The base holds the pair of resist rollers 32. The holder rotatably holds the base. The axis of rotation is for rotating the base. The second correction motor 39 serves as a driving source for rotation.

The second correction motor 39 is a stepping motor. The second correction motor 39 rotates the pair of resist rollers 32 around the Z-axis in accordance with a command from the control part 10.

The first sensor 33 provided at the downstream of the resist unit 31 is a sensor for detecting the horizontal deviation of the paper 2 (deviation in the X-axis direction). On the other hand, the second sensor 34 provided at the upstream of the resist unit 31 is a sensor for detecting the tilt deviation of the paper 2 (deviation around the Z-axis).

The first sensor 33 and the second sensor 34 are constituted by line sensors long in one direction (X-axis direction). In the present embodiment, a contact image sensor (CIS) is used as the line sensor. It should be noted that the first sensor 33 and the second sensor 34 may be any sensors as long as the sensors can detect the horizontal deviation (deviation amount and deviation direction) of the paper 2 and the tilt deviation (tilt angle and tilt direction) of the paper 2.

It should be noted that although the state in which the first sensor 33 and the second sensor 34 are arranged outside the resist unit 31 is shown in the example shown in Figs. 2 and 3, the first sensor 33 and the second sensor 34 may be arranged inside the resist unit 31.

### [Basic operation in deviation correction processing]

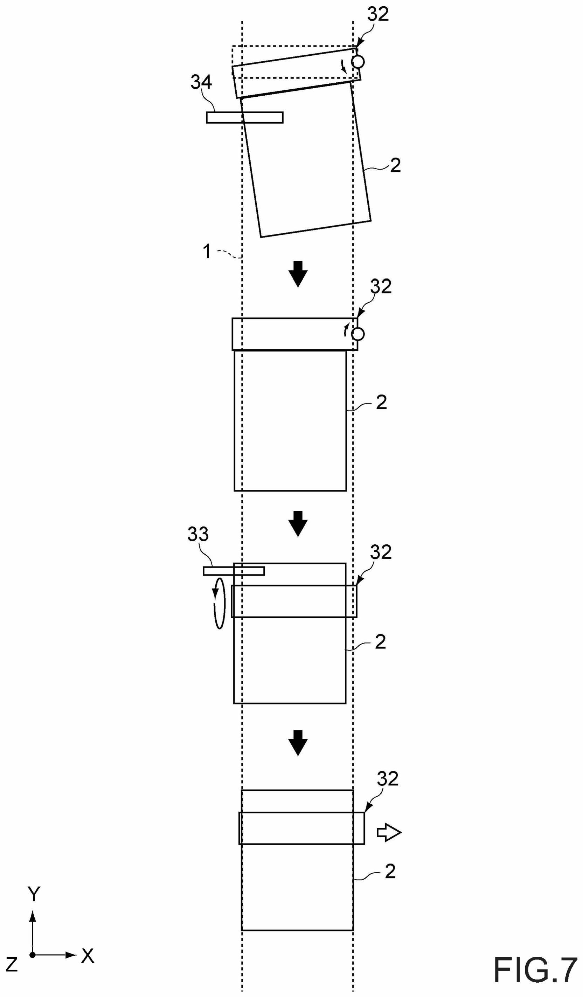

Next, a basic operation of the deviation correction processing of the paper 2 executed by the resist part 30 will be described. Fig. 7 is a diagram showing a basic operation of the deviation correction processing of the paper 2 executed by the resist part 30.

Referring to the top picture in Fig. 7, when the paper 2 is first conveyed from the feed part 20 to the resist part 30, the edge of the paper 2 is detected by the second sensor 34 arranged more upstream than the resist rollers 32 along the conveyance path 1. The control part 10 determines a tilt angle of the paper 2 (X-axis direction is 0 degrees as a reference) and an orientation of the tilt on the basis of a signal detected by the second sensor 34. Then, the control part 10 drives the second correction motor 39 and rotates the pair of resist rollers 32 by the same angle as the tilt angle of the paper 2.

Accordingly, the orientation in the longitudinal direction of the pair of resist rollers 32 is identical to the orientation on the short side of the tilted paper 2. At this time, the paper surface of the paper 2 is fixed to the resist rollers 32 while being sandwiched by the pair of resist rollers 32 from both sides. It should be noted that in Fig. 7, the paper 2 is tilted in a counter-clockwise direction (as viewed from above), so the pair of resist rollers 32 is also rotated in the counter-clockwise direction. However, when the paper 2 is tilted in a clockwise direction (as viewed from above), the pair of resist rollers 32 is also rotated in the clockwise direction.

Then, the control part 10 drives the second correction motor 39 and rotates the pair of resist rollers 32 in the opposite direction by the same angle as before. Accordingly, as shown in the second picture from above in Fig. 7, the pair of resist rollers 32 returns to the position of the reference angle (0 degrees) in the direction of rotation, and the longitudinal direction of the pair of resist rollers 32 aligns with the X-axis direction (width direction of the conveyance path 1). Accordingly, the tilt deviation of the paper 2 is corrected.

As shown in the third picture from above in Fig. 7, the control part 10 drives the resist motor 37, rotates the pair of resist rollers 32, and conveys the paper 2 to the upstream in the conveyance direction (Y-axis direction). Accordingly, the edge of the paper 2 is detected by the first sensor 33.

Then, on the basis of a signal detected by the first sensor 33, the control part 10 determines a horizontal deviation amount of the paper 2 and an orientation of the deviation. Then, the control part 10 drives the first correction motor 38 and moves the pair of resist rollers 32 in a direction opposite to the orientation of the deviation by a distance equivalent to the horizontal deviation amount of the paper 2.

Accordingly, as shown in the bottom picture in Fig. 7, the horizontal deviation of the paper 2 is corrected and the paper 2 can be conveyed correctly along the conveyance path 1 (without the tilt deviation and the horizontal deviation). It should be noted that in Fig. 7, the paper 2 is horizontally misaligned leftwards, so the pair of resist rollers 32 is moved rightwards. However, in a case where the paper 2 is horizontally misaligned rightwards, the pair of resist rollers 32 is moved leftwards.

It should be noted that in the present embodiment, when the pair of resist rollers 32 is horizontally moved and the horizontal deviation of the paper 2 is corrected, the pair of resist rollers 32 is rotated by the resist motor 37 and the paper 2 is conveyed to the upstream in the conveyance direction. On the other hand, when the pair of resist rollers 32 is horizontally moved and the horizontal deviation of the paper 2 is corrected, the rotation of the pair of resist rollers 32 by the resist motor 37 may be temporarily stopped.

Here, in the present embodiment, during the tilt deviation correction processing (see two pictures on the upper side in Fig. 7), special slow down control according to the present technology is executed. Also, in the present embodiment, during the horizontal deviation correction processing (see two pictures on the lower side in Fig. 7), the special slow down control according to the present technology is executed. Accordingly, in the present embodiment, the time required for the deviation correction of the paper 2 is shortened and the vibrations of the resist unit 31 in the deviation correction of the paper 2 are rapidly attenuated. Details of the deviation correction processing will be described later.

### [Basic concept of present technology]

Next, a basic concept of the present technology will be described.

First of all, in the present embodiment, as described above, it is necessary to rotate and horizontally move the pair of resist rollers 32 for the deviation correction processing of the paper 2. At this time, there is a problem in that the entire resist unit 31 vibrates. When the paper 2 is fed to the processing part 40 and the processing is performed on the paper 2 while the resist unit 31 is being vibrating, the quality of the processing (image quality, document printing quality, etc.) lowers.

In this case, a method of alleviating the reduction of the quality of the processing (image quality, document printing quality, etc.) based on vibrations of the resist unit 31 by increasing the distance between the resist part 30 (resist rollers 32) and the processing part 40 (processing position) is also conceivable. However, in recent years, there are more and more demands for downsizing the electronic apparatus 100, and it is generally difficult to ensure a long distance between the resist part 30 (resist rollers 32) and the processing part 40 (processing position) from such a viewpoint.

Moreover, a method of setting a standby time for waiting until vibrations of the resist unit 31 converge after the deviation correction processing may be used. The standby time is often set to at least 50 ms, in general, about 100 ms. It should be understood that setting the standby time leads to a delay of the processing time of the paper 2 in the entire electronic apparatus 100.

It is also conceivable to execute slow down control to gradually reduce the movement speed and the rotation speed of the pair of resist rollers 32 during the horizontal deviation correction and the tilt deviation correction. However, in a case of simple slow down control, there is a problem in that it takes time for the deviation correction. In this manner, if it takes time for the deviation correction, the paper 2 may reach the processing position of the processing part 40 before the deviation correction is finished particularly in a case where the distance between the resist part 30 and the processing part 40 is short.

Moreover, in a case of the simple slow down control, vibrations of the resist unit 31 may not converge in connection with a resonant frequency due to mass-spring-damper components specific to the resist unit 31 depending on an angle of rotation and an amount of movement during the deviation correction. That is, the simple slow down control is insufficient as a technology of reducing vibrations of the resist unit 31.

In view of this, in the present embodiment, by processing to be described below, i.e., the special slow down control, the time required for the deviation correction of the paper 2 is shortened and the vibrations of the resist unit 31 in the deviation correction of the paper 2 are rapidly attenuated. This is the basic concept of the present technology.

### [Horizontal deviation correction processing]

Next, the horizontal deviation correction processing by the control part 10 will be described in detail (see two pictures on the lower side in Fig. 7).

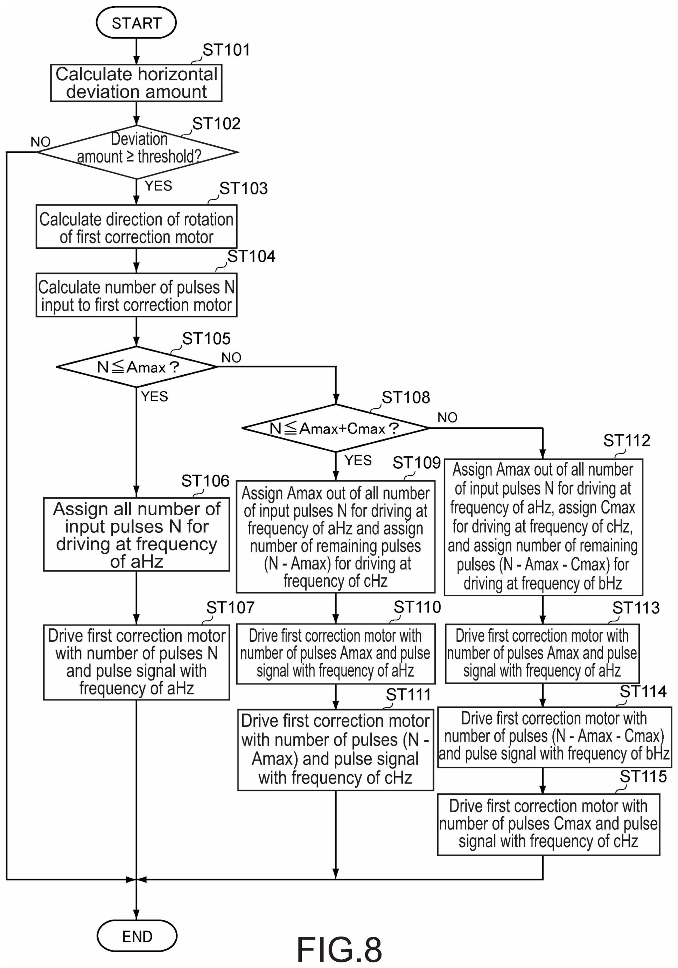

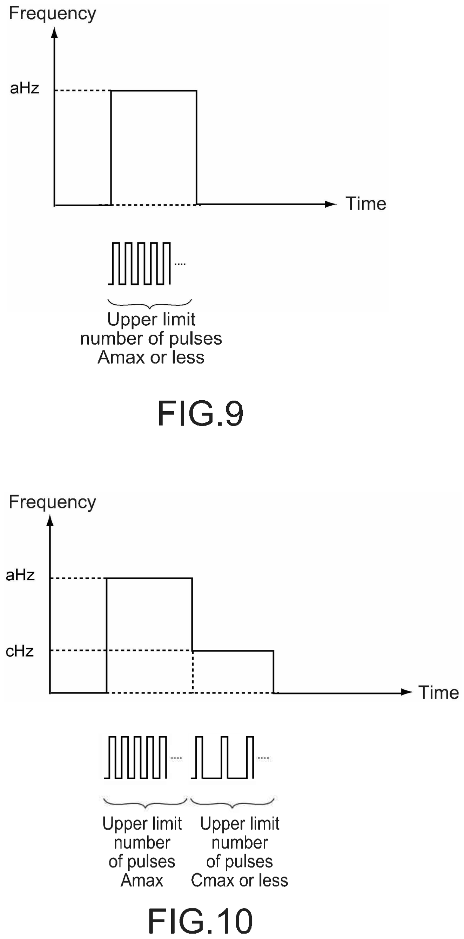

Fig. 8 is a flowchart showing horizontal deviation correction processing by the control part 10 according to the present embodiment. Figs. 9 to 11 are supplemental diagrams for describing the horizontal deviation correction processing.

As a description here, values, such as Amax, Bmax, and Cmax, stored as predetermined values in the memory of the control part 10, and values, such as aHz, bHz, and cHz, will be first described with reference to Figs. 9 to 11.

First of all, aHz, bHz, and cHz respectively represent frequencies of pulse signals input to the first correction motor 38 for driving the first correction motor 38. It should be noted that the relationship aHz > bHz > cHz is satisfied. As the frequency of the pulse signal increases, the speed of the horizontal movement of the pair of resist rollers 32 increases. Therefore, the speed of the horizontal movement of the pair of resist rollers 32 increases in the order of aHz > bHz > cHz.

Here, the frequency of the pulse signal with cHz is a frequency capable of applying to the resist unit 31 vibration components of a phase opposite to vibrations of the resist unit 31 (specific vibrations depending on mass-spring-damper components of the resist unit 31) when the horizontal deviation correction is executed. That is, when the first correction motor 38 is driven at the frequency of cHz, the vibration components of the phase opposite to the vibrations of the resist unit 31 are applied to the resist unit 31, such that vibrations of the resist unit 31 are overcome and the vibrations are rapidly attenuated. The value of the frequency is measured by experiments as a value capable of suitably attenuating the vibrations of the entire resist unit 31 and is prestored in the memory by being measured by experiments.

Amax (first threshold) is an upper limit value of the number of pulses in the pulse signal with aHz (high frequency: the horizontal movement is high speed: high, middle, and low are relative expressions). That is, the pulse signal with aHz (first pulse signal) can be used only with the number of pulses within the range of 1 or more and Amax or less and cannot be used with the number of pulses above Amax.

Bmax is an upper limit value of the number of pulses in the pulse signal with bHz (middle frequency: the horizontal movement is the middle speed: high, middle, and low are relative expressions). That is, the pulse signal with bHz (a third pulse signal) can be used only with the number of pulses within the range of 1 or more and Bmax or less and cannot be used with the number of pulses above Bmax.

Cmax (second threshold) is an upper limit value of the number of pulses in the pulse signal with cHz (low frequency for applying opposite-phase vibrations: the horizontal movement is low speed: high, middle, and low are relative expressions). That is, the input pulse signal (second pulse signal) with cHz can be used only with the number of pulses within the range of 1 or more and Cmax or less and cannot be used with the number of pulses above Cmax.

It should be noted that the relationship Amax + Bmax + Cmax = Xmax is satisfied. Xmax denotes the number of pulses corresponding to the maximum amount of movement in the horizontal direction (X-axis direction) of the pair of resist rollers 32. That is, when an Xmax number of input pulses are input to the first correction motor 38, the resist rollers 32 positioned at a reference position (displacement 0) are moved to a limit position in the horizontal direction.

Next, the processing of the control part 10 will be described with reference to Fig. 8. First of all, the control part 10 calculates the horizontal deviation amount of the paper 2 (X-axis direction) on the basis of a signal detected by the first sensor 33 (ST101). Next, the control part 10 determines whether or not the horizontal deviation amount of the paper 2 is greater than or equal to a preset threshold (ST102).

In a case where the horizontal deviation amount of the paper 2 is less than a threshold (NO in ST102), the control part 10 terminates the processing. On the other hand, in a case where the horizontal deviation amount of the paper 2 is greater than or equal to the threshold (YES in ST102), the control part 10 calculates a direction of rotation (positive rotation: +X direction and reverse rotation: -X direction) of the first correction motor 38, which is necessary for correcting the horizontal deviation of the paper 2 (ST103).

Next, the control part 10 calculates a number of pulses N that should be input to the first correction motor 38, which is necessary for correcting the horizontal deviation of the paper 2 (ST104). It should be noted that as the horizontal deviation of the paper 2 increases, it is necessary to move the pair of resist rollers 32 in the horizontal direction by a longer distance. Therefore, the number of input pulses N also increases. It should be noted that the number of input pulses N is less than or equal to Xmax (= Amax + Bmax + Cmax) described above.

Next, the control part 10 determines whether or not the number of input pulses N is less than or equal to Amax (ST105). As described above, Amax is an upper limit value of the number of pulses in the pulse signal with aHz (high frequency: the movement is high speed).

In a case where the number of input pulses N is less than or equal to Amax (YES in ST105), the control part 10 assigns all the number of input pulses N for driving with the pulse signal with aHz (ST106). Then, the control part 10 drives the first correction motor 38 with the number of pulses N and the pulse signal with aHz (ST107).

In this case, the first correction motor 38 is driven only with the pulse signal with aHz without the pulse signal with bHz and the pulse signal with cHz.

Fig. 9 is a diagram showing a state when the first correction motor 38 is driven only with the pulse signal with aHz without the pulse signal with bHz and the pulse signal with cHz.

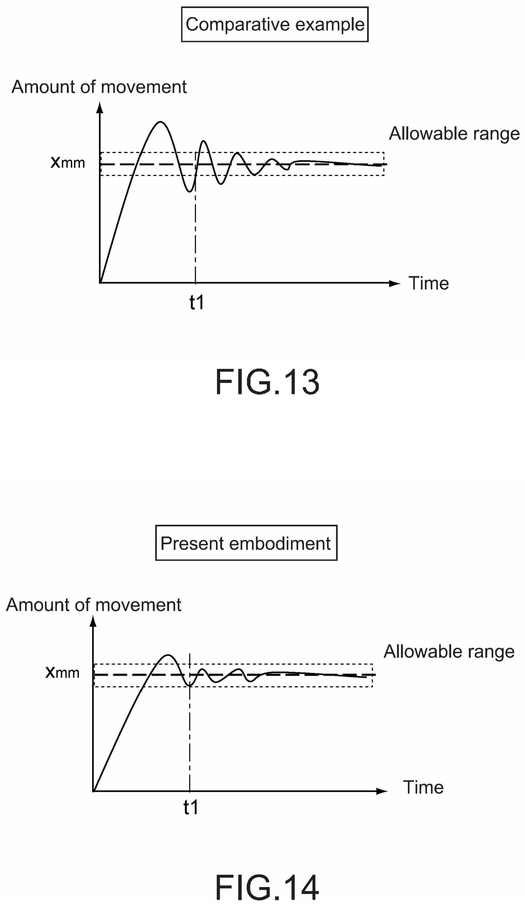

Here, aHz is a relatively high frequency and the movement speed in the horizontal direction (X-axis direction) of the pair of resist rollers 32 is also relatively higher. However, in the case shown in Fig. 9, the number of input pulses N is small and the movement distance in the horizontal direction of the pair of resist rollers 32 is also small. Thus, since vibrations generated in the resist unit 31 are also small, the vibrations of the resist unit 31 are rapidly attenuated (or vibrations above the allowable range (see Figs. 13 and 14) are not generated) even without the pulse signal with cHz (for applying opposite-phase vibration components: the low frequency).

In ST105, in a case where the number of input pulses N to the first correction motor 38 exceeds Amax (NO in ST105), the control part 10 determines whether or not the number of input pulses N is less than or equal to a sum value of Amax and Cmax (ST108). It should be noted that as described above, Cmax is an upper limit value of the number of pulses in the input pulse signal with cHz (for applying opposite-phase vibration components: the low frequency).

In a case where the number of input pulses N is less than or equal to the sum value of Amax and Cmax (YES in ST108), the control part 10 shifts to next ST109. In ST109, the control part 10 assigns the number of pulses corresponding to Amax out of all the number of input pulses N for driving with the pulse signal with aHz and assigns the number of remaining pulses (N - Amax) for driving with the pulse signal with cHz.

Then, the control part 10 drives the first correction motor 38 with the number of pulses Amax and the pulse signal with aHz (ST110). Then, the control part 10 drives the first correction motor 38 with the number of pulses (N - Amax) and the pulse signal with cHz (ST111).

In this case, the first correction motor 38 is driven with the pulse signal with aHz and the pulse signal with cHz without the pulse signal with bHz.

Fig. 10 is a diagram showing a state when the first correction motor 38 is driven with the pulse signal with aHz and the pulse signal with cHz without the pulse signal with bHz.

In the case shown in Fig. 10, the first correction motor 38 is first driven with the pulse signal with aHz and the pair of resist rollers 32 is rapidly moved in the horizontal direction (X-axis direction). Then, the frequency of the pulse signal is decreased from aHz to cHz, the first correction motor 38 is driven with the pulse signal with cHz, and the horizontal movement speed of the resist rollers 32 is decreased (slow down control: two steps).

In the present embodiment, the frequency of the pulse signal with cHz is set to be a frequency capable of applying to the resist unit 31 the vibration components of the phase opposite to the vibrations of the resist unit 31. Thus, when the first correction motor 38 is driven at the frequency of cHz, the vibration components of the phase opposite to the vibrations of the resist unit 31 are applied to the resist unit 31. Accordingly, the vibrations of the resist unit 31 are overcome and the vibrations are rapidly attenuated (special slow down control).

In ST108, in a case where the number of input pulses exceeds the sum value of Amax and Cmax (NO in ST108), the control part 10 shifts to ST112. In ST112, the control part 10 assigns the number of pulses corresponding to Amax out of all the number of input pulses N for driving with the pulse signal with aHz and assigns the number of pulses corresponding to Cmax for driving with the pulse signal with cHz. Then, the control part 10 assigns the number of remaining pulses (N - Amax - Cmax) for driving with the pulse signal with bHz.

Then, the control part 10 drives the first correction motor 38 with the number of pulses Amax and the pulse signal with aHz (ST113). Then, the control part 10 drives the first correction motor 38 with the number of pulses (N - Amax - Cmax) and the pulse signal with bHz (ST114). Then, the control part 10 drives the first correction motor 38 with the number of pulses Cmax and the pulse signal with cHz (ST115).

In this case, the first correction motor 38 is driven, using all the pulse signal with aHz, the pulse signal with bHz, and the pulse signal with cHz in this order.

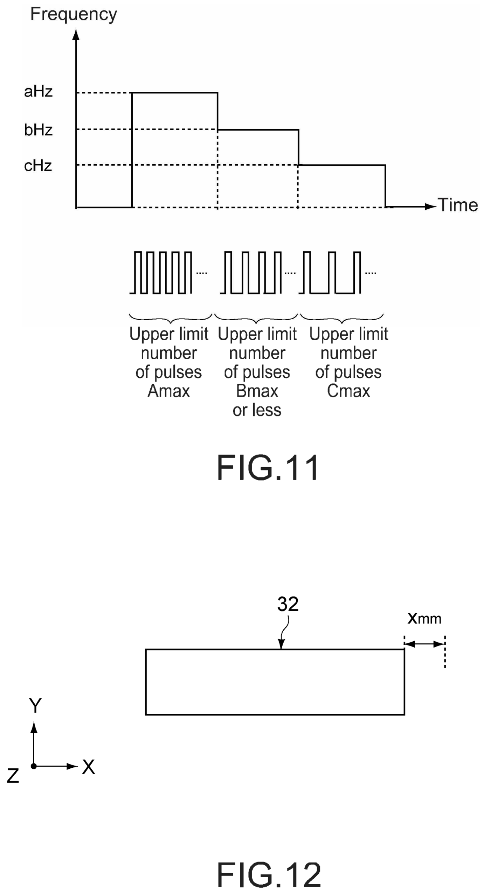

Fig. 11 is a diagram showing a state when the first correction motor 38 is driven, using all the pulse signal with aHz, the pulse signal with bHz, and the pulse signal with cHz.

In the case shown in Fig. 11, the first correction motor 38 is first driven with the pulse signal with aHz and the pair of resist rollers 32 is rapidly moved in the horizontal direction (X-axis direction). Then, the frequency of the pulse signal is decreased from aHz to bHz, the first correction motor 38 is driven with the pulse signal with bHz, and the horizontal movement speed of the resist rollers 32 is decreased. Then, the frequency of the pulse signal is decreased from bHz to cHz, the first correction motor 38 is driven with the pulse signal with cHz, and the horizontal movement speed of the pair of resist rollers 32 is further decreased (slow down control: three steps).

In the present embodiment, the frequency of the pulse signal with cHz is set to be a frequency capable of applying to the resist unit 31 the vibration components of the phase opposite to the vibrations of the resist unit 31. Thus, when the first correction motor 38 is driven at the frequency of cHz, the vibration components of the phase opposite to the vibrations of the resist unit 31 are applied to the resist unit 31. Accordingly, the vibrations of the resist unit 31 are overcome and the vibrations are rapidly attenuated (special slow down control).

It should be noted that when the amount of movement of the pair of resist rollers 32 exceeds a certain value, the movement may take time only with the pulse signal with aHz and the pulse signal with cHz. In view of this, in the present embodiment, driving with the pulse signal with bHz is interposed between driving with the pulse signal with aHz and driving with the pulse signal with cHz.

Fig. 12 is a diagram showing a state when the pair of resist rollers 32 is moved by xmm in the horizontal direction (X-axis direction). Here, xmm is set to be an amount of movement of the pair of resist rollers 32 when the number of pulses above Amax is input to the first correction motor 38 (i.e., longer than the amount of movement corresponding to Fig. 9).

Fig. 13 is a diagram showing an amount of movement of the pair of resist rollers 32 (vibrations of the resist unit 31) when the pair of resist rollers 32 is moved by xmm in the horizontal direction only with the pulse signal with aHz in a comparative example.

As shown in Fig. 13, when the pair of resist rollers 32 is moved by xmm in the horizontal direction only with the pulse signal with aHz, vibrations exceed the allowable range (overshoot, undershoot), and it takes time until vibrations fall within the allowable range.

Fig. 14 is a diagram showing an amount of movement of the pair of resist rollers 32 (vibrations of the resist unit 31) when the pair of resist rollers 32 is moved by xmm in the horizontal direction with the pulse signal with aHz and the pulse signal with cHz (and also the pulse signal with bHz) in the present embodiment.

As shown in Fig. 14, in the present embodiment, the frequency is stepwisely decreased. Therefore, it takes longer time until the pair of resist rollers 32 reaches a target xmm point as compared to the comparative example shown in Fig. 13. However, in the present embodiment, the vibration components of the phase opposite to the vibrations of the resist unit 31 are applied to the resist unit 31 with the pulse signal with cHz. Accordingly, vibrations of the resist unit 31 are overcome. Thus, in the present embodiment, vibrations of the resist unit 31 are more rapidly attenuated as compared to the comparative example and vibrations more rapidly fall within the allowable range as compared to the comparative example.

For example, in the comparative example shown in Fig. 13, vibrations do not fall within the allowable range at a time t1. Meanwhile, in the present embodiment shown in Fig. 14, vibrations fall within the allowable range before the same time t1.

### [Inclination deviation correction processing]

Next, the tilt deviation correction processing by the control part 10 will be described in detail (see two pictures on the upper side in Fig. 7).

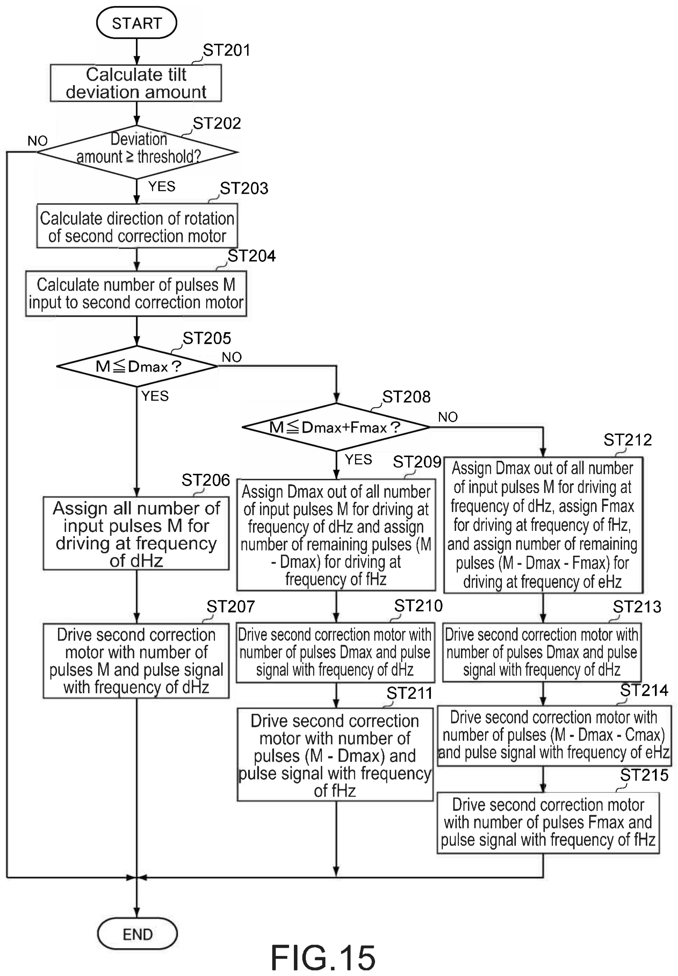

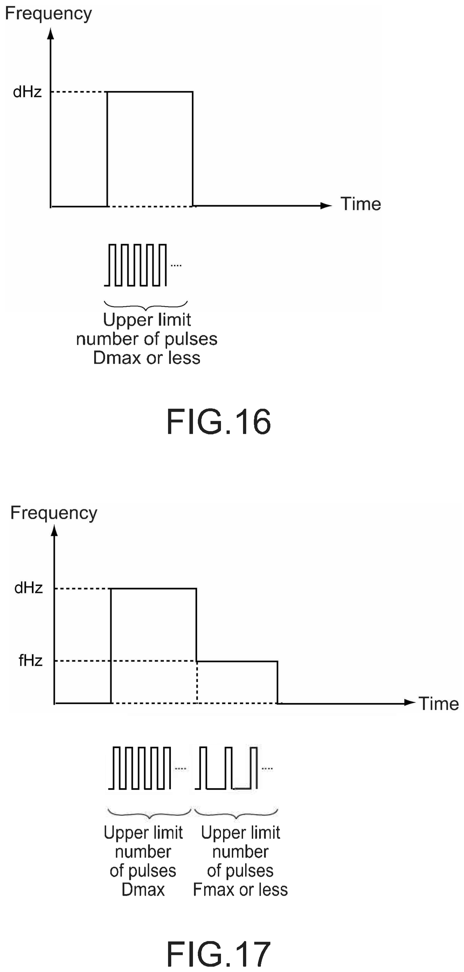

Fig. 15 is a flowchart showing the tilt deviation correction processing by the control part 10 according to the present embodiment. Figs. 16 to 18 are supplemental diagrams for describing the tilt deviation correction processing. It should be noted that in the present embodiment, processing substantially similar to the above-mentioned horizontal deviation correction processing is executed as the tilt deviation correction processing.

As a description here, values, such as Dmax, Emax, and Fmax, stored as predetermined values in the memory of the control part 10, and values, such as dHz, eHz, and fHz, will be first described with reference to Figs. 16 to 18.

First of all, dHz, eHz, and fHz represent frequencies of pulse signals input to the second correction motor 39 for driving the second correction motor 39, respectively. It should be noted that the relationship dHz > eHz > fHz is satisfied. As the frequency of the pulse signal increases, the speed of the rotation of the pair of resist rollers 32 increases. Therefore, the speed of the rotation of the pair of resist rollers 32 increases in the order of dHz > eHz > fHz.

Here, the frequency of the pulse signal with fHz is a frequency capable of applying to the resist unit 31 vibration components of a phase opposite to vibrations of the resist unit 31 (specific vibrations depending on mass-spring-damper components of the resist unit 31) when the tilt deviation correction is executed. That is, when the second correction motor 39 is driven at a frequency of fHz, the vibration components of the phase opposite to the vibrations of the resist unit 31 are applied to the resist unit 31. Accordingly, the vibrations of the resist unit 31 are overcome and the vibrations are rapidly attenuated. The value of the frequency is measured by experiments as a value capable of suitably attenuating the vibrations of the entire resist unit 31 and prestored in the memory.

Dmax (first threshold) is an upper limit value of the number of pulses in the pulse signal with dHz (high frequency: the rotation is at high speed: high, middle, and low are relative expressions). That is, the pulse signal with dHz (first pulse signal) can be used only with the number of pulses within the range of 1 or more and Dmax or less and cannot be used with the number of pulses above Dmax.

Emax is an upper limit value of the number of pulses in the pulse signal with eHz (middle frequency: the rotation is at middle speed: high, middle, and low are relative expressions). That is, the pulse signal with eHz (third pulse signal) can be used only with the number of pulses within the range of 1 or more and Emax or less and cannot be used with the number of pulses above Emax.

Fmax (second threshold) is an upper limit value of the number of pulses in the pulse signal with fHz (low frequency for applying opposite-phase vibrations: the rotation is at low speed: high, middle, and low are relative expressions). That is, the input pulse signal (second pulse signal) with fHz can be used only with the number of pulses within the range of 1 or more and Fmax or less and cannot be used with the number of pulses above Fmax.

It should be noted that the relationship Dmax + Emax + Fmax = θmax is satisfied. θmax denotes the number of pulses corresponding to a maximum rotation amount around the Z-axis of the pair of resist rollers 32. That is, when a θmax number of input pulses are input to the second correction motor 39, the resist rollers 32 positioned at a reference angle (0 degrees) are rotated to a limit position around the Z-axis.

Next, the processing of the control part 10 will be described with reference to Fig. 15. First of all, the control part 10 calculates a tilt deviation angle of the paper 2 (around the Z-axis) on the basis of a signal detected by the second sensor 34 (ST201). Next, the control part 10 determines whether or not the tilt deviation angle of the paper 2 is greater than or equal to a preset threshold (ST202).

In a case where the tilt deviation angle of the paper 2 is less than a threshold (NO in ST202), the control part 10 terminates the processing. On the other hand, in a case where the tilt deviation angle of the paper 2 is greater than or equal to the threshold (YES in ST202), the control part 10 calculates a direction of rotation (positive rotation: +θ direction, reverse rotation: -θ direction) of the second correction motor 39, which is necessary for correcting the tilt deviation of the paper 2 (ST203).

Next, the control part 10 calculates a number of pulses M that should be input to the second correction motor 39, which is necessary correcting the tilt deviation of the paper 2 (ST204). It should be noted that as the tilt deviation angle of the paper 2 increases, it is necessary to rotate the pair of resist rollers 32 around the Z-axis by a longer distance. Therefore, the number of input pulses M also increases. It should be noted that the number of input pulses M is less than or equal to θmax (= Dmax + Emax + Fmax) described above.

Next, the control part 10 determines whether or not the number of input pulses M is less than or equal to Dmax (ST205). As described above, Dmax is an upper limit value of the number of pulses in the pulse signal with dHz (high frequency: the rotation is at high speed).

In a case where the number of input pulses M is less than or equal to Dmax (YES in ST205), the control part 10 assigns all the number of input pulses M for driving with the pulse signal with dHz (ST206). Then, the control part 10 drives the second correction motor 39 with the number of pulses M and the pulse signal with dHz (ST207).

In this case, the second correction motor 39 is driven only with the pulse signal with dHz without the pulse signal with eHz and the pulse signal with fHz.

Fig. 16 is a diagram showing a state when the second correction motor 39 is driven only the pulse signal with dHz without the pulse signal with eHz and the pulse signal with fHz.

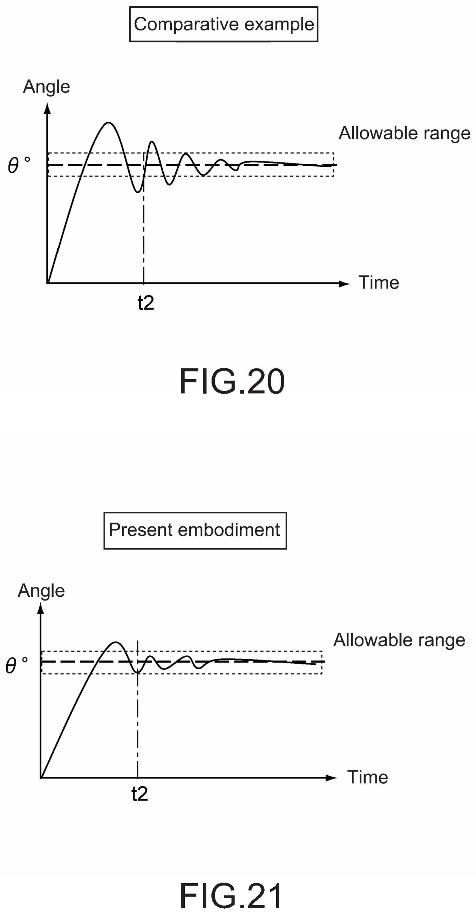

Here, dHz is a relatively high frequency and the speed of rotation around the Z-axis of the pair of resist rollers 32 is also relatively higher. However, in the case shown in Fig. 16, the number of input pulses M is small and the angle of rotation of the pair of resist rollers 32 is also small. Thus, vibrations generated in the resist unit 31 are also small. Therefore, the vibrations of the resist unit 31 are rapidly attenuated (or vibrations above the allowable range (see Figs. 20 and 21) are not generated) even without the pulse signal with fHz (for applying opposite-phase vibration components: the low frequency).

In ST205, in a case where the number of pulses M input to the second correction motor 39 exceeds Dmax (NO in ST205), the control part 10 determines whether or not the number of input pulses M is less than or equal to a sum value of Dmax and Fmmax (ST208). It should be noted that as described above, Fmax is an upper limit value of the number of pulses in the input pulse signal with fHz (for applying opposite-phase vibration components: the low frequency).

In a case where the number of input pulses M is less than or equal to the sum value of Dmax and Fmax (YES in ST208), the control part 10 shifts to next ST209. In ST209, the control part 10 assigns the number of pulses corresponding to Dmax of all the number of input pulses M for driving with the pulse signal with dHz and assigns the number of remaining pulses (M - Dmax) for driving with the pulse signal with fHz.

Then, the control part 10 drives the second correction motor 39 with the number of pulses Dmax and the pulse signal with dHz (ST210). Then, the control part 10 drives the second correction motor 39 with the number of pulses (M - Dmax) and the pulse signal with fHz (ST211).

In this case, the second correction motor 39 is driven with the pulse signal with dHz and the pulse signal with fHz without the pulse signal with eHz.

Fig. 17 is a diagram showing a state when the second correction motor 39 is driven with the pulse signal with dHz and the pulse signal with fHz without the pulse signal with eHz.

In the case shown in Fig. 17, the second correction motor 39 is first driven with the pulse signal with dHz and the pair of resist rollers 32 is rapidly rotated around the Z-axis. Then, the frequency of the pulse signal is decreased from dHz to fHz, the second correction motor 39 is driven with the pulse signal with fHz, and the speed of rotation around the Z-axis of the resist rollers 32 is decreased (slow down control: two steps).

In the present embodiment, the frequency of the pulse signal with fHz is set to be a frequency capable of applying to the resist unit 31 the vibration components of the phase opposite to the vibrations of the resist unit 31. Thus, when the second correction motor 39 is driven at the frequency of fHz, the vibration components of the phase opposite to the vibrations of the resist unit 31 are applied to the resist unit 31. Accordingly, the vibrations of the resist unit 31 are overcome and the vibrations are rapidly attenuated (special slow down control).

In ST208, in a case where the number of input pulses M exceeds a sum value of Dmax and Fmax (NO in ST208), the control part 10 shifts to ST212. In ST212, the control part 10 assigns the number of pulses corresponding to Dmax out of all the number of input pulses M for driving with the pulse signal with dHz and assigns the number of pulses corresponding to Fmax for driving with the pulse signal with fHz. Then, the control part 10 assigns the number of remaining pulses (M - Dmax - Fmax) for driving with the pulse signal with eHz.

Then, the control part 10 drives the second correction motor 39 with the number of pulses Dmax and the pulse signal with dHz (ST213). Then, the control part 10 drives the second correction motor 39 with the number of pulses (M - Dmax - Fmax) and the pulse signal with eHz (ST214). Then, the control part 10 drives the second correction motor 39 with the number of pulses Fmax and the pulse signal with fHz (ST215).

In this case, the second correction motor 39 is driven, using all the pulse signal with dHz, the pulse signal with eHz, and the pulse signal with fHz in this order.

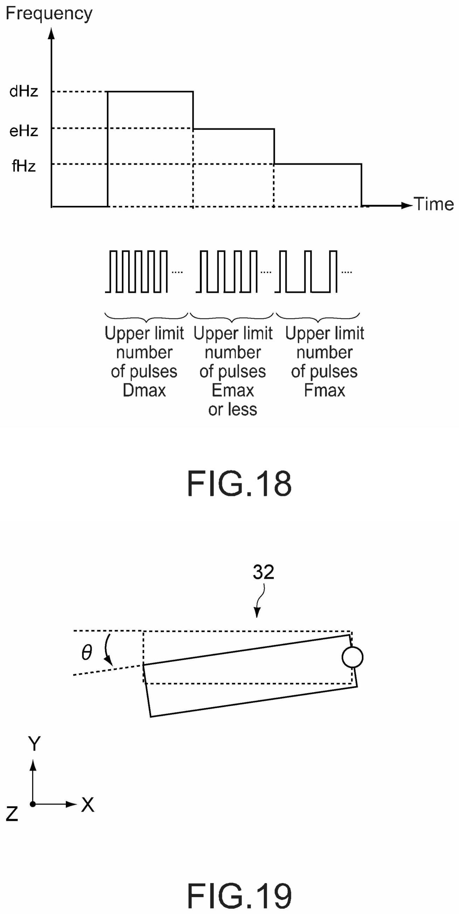

Fig. 18 is a diagram showing a state when the second correction motor 39 is driven with all the pulse signal with dHz, the pulse signal with eHz, and the pulse signal with fHz.

In the case shown in Fig. 18, the second correction motor 39 is first driven with the pulse signal with dHz and the pair of resist rollers 32 is rapidly rotated around the Z-axis. Then, the frequency of the pulse signal is decreased from dHz to eHz, the second correction motor 39 is driven with the pulse signal with eHz, and the speed of rotation around the Z-axis of the resist rollers 32 is decreased. Then, the frequency of the pulse signal is further decreased from eHz to fHz, the second correction motor 39 is driven with the pulse signal with fHz, and the speed of rotation around the Z-axis of the pair of resist rollers 32 is further decreased (slow down control: three steps).

In the present embodiment, the frequency of the pulse signal with fHz is set to be a frequency capable of applying to the resist unit 31 the vibration components of the phase opposite to the vibrations of the resist unit 31. Thus, when the second correction motor 39 is driven at the frequency of fHz, the vibration components of the phase opposite to the vibrations of the resist unit 31 are applied to the resist unit 31. Accordingly, the vibrations of the resist unit 31 are overcome and the vibrations are rapidly attenuated (special slow down control).

It should be noted that when the angle of rotation of the pair of resist rollers 32 exceeds a certain value, the rotation may take time only with the pulse signal with dHz and the pulse signal with fHz. In view of this, in the present embodiment, driving with the pulse signal with eHz is interposed between driving with the pulse signal with dHz and driving with the pulse signal with fHz.

Here, the operation (hereinafter, referred to as a positive rotation. See the top figure in Fig. 7) in a case where the pair of resist rollers 32 is rotated such that the pair of resist rollers 32 takes a target angle of rotation of θ degrees from the reference angle (0 degrees) has been described. On the other hand, the operation in a case where (hereinafter, referred to as an reverse rotation. See the second figure from above in Fig. 7) in which the pair of resist rollers 32 is rotated so that the pair of resist rollers 32 is returned to the reference angle (0 degrees) from the target angle of rotation of θ degrees is similar to the operation in the positive rotation except for the following points (1) and (2). Thus, the details will be omitted.

(1) In the reverse rotation (returning rotation), the direction of rotation of the second correction motor 39 is opposite to the positive rotation. (2) In the reverse rotation, the direction of rotation is merely opposite to that of the previous positive rotation and it is sufficient to make the same motion as that positive rotation. Therefore, it is unnecessary to calculate those in ST201 to 206, ST208 and 209, ST212, etc. which have been already calculated.

Fig. 19 is a diagram showing a state when the pair of resist rollers 32 is rotated around the Z-axis by the target angle of rotation of θ degrees. It should be noted that the angle of rotation of θ degrees here is set as an angle of rotation of the pair of resist rollers 32 when the number of pulses above Dmax is input to the second correction motor 39 (i.e., it is greater than the angle of rotation corresponding to Fig. 16).

Fig. 20 is a diagram showing an angle of rotation of the pair of resist rollers 32 (vibrations of the resist unit 31) when the pair of resist rollers 32 is rotated around the Z-axis by θ degrees only with the pulse signal with dHz in a comparative example.

As shown in Fig. 20, when the pair of resist rollers 32 is rotated around the Z-axis by θ degrees only with the pulse signal with dHz, vibrations exceeding the allowable range (overshoot, undershoot) are generated, and it takes time until vibrations fall within the allowable range.

Fig. 21 is a diagram showing the angle of rotation of the pair of resist rollers 32 (vibrations of the resist unit 31) when the pair of resist rollers 32 is rotated around the Z-axis by θ degrees with the pulse signal with dHz and the pulse signal with fHz (and also the pulse signal with eHz) in the present embodiment.

As shown in Fig. 21, in the present embodiment, the frequency is stepwisely decreased. Therefore, it takes longer time until the pair of resist rollers 32 reaches the angle of rotation of θ degrees as compared to the comparative example shown in Fig. 20. However, in the present embodiment, the vibration components of the phase opposite to the vibrations of the resist unit 31 are applied to the resist unit 31 in accordance with the pulse signal with fHz. Accordingly, vibrations of the resist unit 31 are overcome. Thus, in the present embodiment, vibrations of the resist unit 31 are more rapidly attenuated as compared to the comparative example and vibrations more rapidly fall within the allowable range as compared to the comparative example.

For example, in the comparative example shown in Fig. 20, vibrations do not fall within the allowable range at a time t2. Meanwhile, in the present embodiment shown in Fig. 21, vibrations fall within the allowable range before the same time t2.

It should be noted that in Figs. 19 to 21, the positive rotation has been described, though the same applies to the reverse rotation (returning rotation).

### <Effects, etc.>

As described above, in the present embodiment, during the deviation correction of the paper 2 by the pair of resist rollers 32, the speed of the motion (horizontal movement, rotation) of the pair of resist rollers 32 is stepwisely decreased (slow down control). In addition, the frequency of the pulse signal (cHz, fHz) for finally driving the correction motor is set to be a frequency capable of applying (generating) to the resist unit 31 the vibration components of the phase opposite to the phase of vibrations in the resist unit 31 (special slow down control).

Accordingly, the vibration components of the phase opposite to the vibrations of the resist unit 31 are applied to the resist unit 31. Therefore, vibrations of the resist unit 31 are overcome and the vibrations are rapidly attenuated. That is, in the present embodiment, the time required for the deviation correction of the paper 2 is shortened and the vibrations of the resist unit 31 in the deviation correction of the paper 2 can be rapidly attenuated.

Accordingly, in the present embodiment, for example, even in a case where the distance between the resist part 30 (resist rollers 32) and the processing part 40 (processing position) is small, the paper 2 can be fed to the processing part 40 with vibrations set within the allowable range. Thus, the quality of the processing (image quality, document printing quality, etc.) on the paper 2 in the processing part 40 can be prevented from lowering.

Moreover, in the present embodiment, the standby time for waiting until vibrations of the resist unit 31 converge after the deviation correction processing can be reduced (e.g., 30 ms or less) (or the standby time itself can be eliminated). It should be noted that in the present embodiment, the deviation correction at the accuracy of 0.1 mm is possible.

### <Various modified examples>

Hereinabove, the case where the number of steps for the speed in the (special) slow down control is three at most has been described. On the other hand, the number of steps can be modified as appropriate.

Hereinabove, the case where the special slow down control is executed both in the horizontal deviation correction processing and the tilt deviation correction processing has been described, though the special slow down control may be executed in either one of them. Moreover, in the present embodiment, the case where the special slow down control is executed both in the positive rotation and the reverse rotation (returning rotation) for the tilt deviation correction processing has been described, though the special slow down control may be executed in either one of them.

Hereinabove, the case where the frequency values in cHz, fHz (for applying opposite-phase vibration components) are fixed values has been described. On the other hand, the frequency values in cHz, fHz may be controlled to be variable. For example, the frequency value in cHz may be controlled to be variable in accordance with the amount of movement of the pair of resist rollers 32 during the horizontal deviation correction. Moreover, for example, the frequency value in fHz may be controlled to be variable in accordance with the angle of rotation of the pair of resist rollers 32 during the tilt deviation correction. In this case, vibrations of the resist unit 31 can be further accurately and rapidly attenuated.

Hereinabove, the paper 2 has been described as an example of the recording medium to be processed, though the recording medium is not limited to the paper 2. The recording medium may be metal, resin, cloth, wood, for example.

It should be understood by those skilled in the art that various modifications, combinations, subcombinations and alterations may occur depending on design requirements and other factors insofar as they are within the scope of the appended claims or the equivalents thereof.

## Claims

1. An electronic apparatus (100), comprising:
a resist unit (31) including
a resist roller (32) that feeds a recording medium (2) to a processing part (40) that performs processing on the recording medium (2) and
a correction motor (38, 39) capable of moving the resist roller (32) to correct a deviation of the recording medium (2); and
a control part (10) that drives the correction motor (38, 39) with a first pulse signal having a first frequency, and then drives the correction motor (38, 39) with a second pulse signal having a second frequency, which is a frequency lower than the first frequency and is a frequency capable of applying to the resist unit (31) vibration components of a phase opposite to a phase of vibrations in the resist unit (31).

2. The electronic apparatus (100) according to claim 1, wherein
the control part (10) drives the correction motor (38, 39) in accordance with a third pulse signal having a third frequency lower than the first frequency and higher than the second frequency after the control part (10) drives the correction motor (38, 39) with the first pulse signal and before the control part (10) drives the correction motor (38, 39) with the second pulse signal.

3. The electronic apparatus (100) according to claim 2, wherein
the control part (10) determines whether or not the number of pulses input to the correction motor (38, 39) necessary for correcting the deviation of the recording medium (2) is less than or equal to a first threshold, and, in a case where the number of input pulses is less than or equal to the first threshold, drives the correction motor (38, 39) with the first pulse signal without the second pulse signal and the third pulse signal.

4. The electronic apparatus (100) according to claim 3, wherein
the control part (10), in a case where the number of input pulses is less than or equal to the first threshold, assigns all the number of input pulses for driving with the first pulse signal.

5. The electronic apparatus (100) according to claim 4, wherein
the first threshold is an upper limit value of the number of pulses assigned for driving with the first pulse signal.

6. The electronic apparatus (100) according to claim 3, wherein
the control part (10), in a case where the number of pulses input to the correction motor (38, 39) necessary for correcting the deviation of the recording medium (2) exceeds the first threshold, determines whether or not the number of input pulses is less than or equal to a sum value of the first threshold and the second threshold, and, in a case where the number of input pulses is less than or equal to the sum value, drives the correction motor (38, 39) with the first pulse signal and the second pulse signal without the third pulse signal.

7. The electronic apparatus (100) according to claim 6, wherein
the control part (10), in a case where the number of input pulses is less than or equal to the sum value, assigns the number of pulses out of the number of input pulses, which is a number corresponding to the first threshold, for driving with the first pulse signal, and assigns the number of remaining pulses out of the number of input pulses, which corresponds to a number obtained by subtracting the first threshold from the number of input pulses, for driving with the second pulse signal.

8. The electronic apparatus (100) according to claim 7, wherein
the second threshold is an upper limit value of the number of pulses assigned for driving with the second pulse signal.

9. The electronic apparatus (100) according to claim 6, wherein
the control part (10), in a case where the number of pulses input to the correction motor (38, 39) necessary for correcting the deviation of the recording medium (2) exceeds the sum value, drives the correction motor (38, 39) with the first pulse signal, the second pulse signal, and the third pulse signal.

10. The electronic apparatus (100) according to claim 9, wherein
in a case where the number of input pulses exceeds the sum value, the control part (10) assigns the number of pulses out of the number of input pulses, which corresponds to the first threshold, for driving with the first pulse signal, assigns the number of pulses out of the number of input pulses, which corresponds to the second threshold, for driving with the second pulse signal, and assigns the number of remaining pulses out of the number of input pulses, which corresponds to a number obtained by subtracting the first threshold and the second threshold from the number of input pulses, for driving with the third pulse signal.

11. The electronic apparatus (100) according to any one of claims 1 to 10, wherein
the correction motor (38, 39) includes a first correction motor (38) that moves the resist roller (32) to correct a horizontal deviation of the recording medium (2).

12. The electronic apparatus (100) according to any one of claims 1 to 10, wherein
the correction motor (38, 39) includes a second correction motor (39) that rotates the resist roller (32) to a tilt deviation of the recording medium (2).

13. A resist unit (31), comprising:
a resist roller (32) that feeds a recording medium (2) to a processing part (40) that performs processing on the recording medium (2); and
a correction motor (38, 39) capable of moving the resist roller (32) to correct a deviation of the recording medium (2), wherein
the correction motor (38, 39) is driven with a first pulse signal having a first frequency, and then the correction motor (38, 39) is driven with a second pulse signal having a second frequency, which is a frequency lower than the first frequency and is a frequency capable of applying to the resist unit (31) vibration components of a phase opposite to a phase of vibrations in the resist unit (31).

14. A driving method for a resist unit (31) including a resist roller (32) that feeds a recording medium (2) to a processing part (40) that performs processing on the recording medium (2) and a correction motor (38, 39) capable of moving the resist roller (32) to correct a deviation of the recording medium (2), the driving method comprising
driving the correction motor (38, 39) with a first pulse signal having a first frequency, and then driving the correction motor (38, 39) with a second pulse signal having a second frequency, which is a frequency lower than the first frequency and is a frequency capable of applying to the resist unit (31) vibration components of a phase opposite to a phase of vibrations in the resist unit (31).
